# EUROPÄISCHE PATENTANMELDUNG

(11) **EP 3 009 799 A1**
(43) Veröffentlichungstag der Anmeldung: **20.04.2016**
(21) Anmeldenummer: 15183267.2
(22) Anmeldetag: 25.01.2010
(51) Int. Cl.: G01C 21/36, G06F 3/0488, G06F 3/01

(54) **VERFAHREN ZUM BETRIEB EINES KRAFTFAHRZEUGES MIT EINEM TOUCHSCREEN**

(30) Priorität: 09.02.2009 DE 102009008041
(62) Teilanmeldung aus: 10701476.3
(71) Anmelder: Volkswagen Aktiengesellschaft, 38440 Wolfsburg (DE)
(72) Erfinder: Wäller, Christoph, 38196 Braunschweig (DE); Peterwert, Katharina, 38102 Braunschweig (DE)

(57) **Zusammenfassung**

Die Erfindung betrifft ein Verfahren zum Betrieb eines Kraftfahrzeuges (1) mit einem Display (12) zur Darstellung veränderlicher Informationen und einem über dem Display (12) angeordneten Touchscreen (11) zur Eingabe von Befehlen durch Berühren des Touchscreens (11), wobei mittels des Displays (12) ein Bedienelement zur Bedienung einer Funktion des Kraftfahrzeuges (1) durch Berühren des Touchscreens (11) im Bereich des Bedienelementes dargestellt wird, und wobei die Funktion des Kraftfahrzeuges (1) aufgrund einer in der Umgebung des Touchscreens (11) ausgeführten Geste einer Hand ohne Berührung des Touchscreens (11) ausgeführt wird.

## Beschreibung

Die Erfindung betrifft ein Verfahren zum Betrieb eines Kraftfahrzeuges mit einem Display zur Darstellung veränderlicher Informationen und einem über dem Display angeordneten Touchscreen zur Eingabe von Befehlen durch Berühren des Touchscreens.

Gemäß der DE 101 39 693 A1 sind bei modernen elektronischen Einrichtungen im Fahrzeug, die ständig zusätzliche Funktionen mit immer mehr Optionen anböten, wegen der Begrenzung des Bauraumes für die dazugehörigen Bedienelemente Multifunktions-Bedienelemente geschaffen worden, mittels derer verschiedene Funktionen der angeschlossenen Einrichtungen bedienbar sind. So sei beispielsweise aus der EP 0 366 132 B1 eine Multifunktions-Bedieneinrichtung für Kraftfahrzeuge bekannt, bei der die Auswahl von Funktionsgruppen und die Auswahl individueller Funktionen mittels eines Drehschalters erfolgt, und bei der eine ENTER-Funktion auslösbar ist, wobei ein und derselbe bidirektionale Drehschalter zur Menü-Auswahl und individuellen Funktionsauswahl dient. Dieser Drehschalter weist dabei Raststellungen auf, denen Menüs oder einzelne Funktionen zugeordnet sind, wobei die ENTER-Funktion durch eine Axialbewegung des Drehschalters auslösbar ist.

Darüber hinaus ist es z. B. aus der US 2006/0146037 A1 bekannt, ähnliche menügeführte Bedienkonzepte mittels Touchscreens in einem Kraftfahrzeug zu implementieren. Dabei offenbart die US 2006/0146037 A1 eine Eingabevorrichtung für ein Kraftfahrzeug mit einem Touchscreen zur Eingabe von Befehlen durch Berühren einer Bedienfläche oder durch Drücken auf die Bedienfläche, einem Aktor zum Bewegen des Touchscreens in zumindest eine Richtung gegenüber einem Referenzkörper und einer im wesentlichen U-förmigen Feder zum mechanischen Verbinden des Touchscreens mit dem Referenzkörper.

Die DE 10 2006 029 506 A1 offenbart eine Eingabevorrichtung für ein Kraftfahrzeug, wobei die Eingabevorrichtung ein erstes Display zur optischen Darstellung von Informationen, zumindest ein über dem ersten Display angeordnetes zweites Display zur optischen Darstellung von Informationen und einen über dem zweiten Display angeordneten Touchscreen zur Eingabe von Befehlen durch Berühren einer Bedienfläche des Touchscreens umfasst, und wobei das zweite Display zur Anzeige einer Gestenerkennung nutzbar ist.

Die DE 103 42 666 A1 offenbart ein Bediensystem für ein Kraftfahrzeug, mit einer optischen Anzeigeeinheit zur Darstellung von mindestens einer Bedienfunktion und mindestens einem manuellen Betätigungsmittel, das zur Bedienung der mindestens einen dargestellten Bedienfunktion der optischen Anzeigeeinheit zugeordnet ist, wobei mindestens ein weiteres manuelles Betätigungsmittel und mindestens ein Sensor vorgesehen sind, der eine Annäherung an das mindestens eine weitere Betätigungsmittel detektiert, und wobei nach der erkannten Annäherung eine dem weiteren manuellen Betätigungsmittel zugeordnete Bedienfunktion auf der optischen Anzeigeeinheit darstellbar ist.

Die DE 10 2005 035 111 A1 offenbart ein Bedien- und Anzeigesystem für ein Fahrzeug mit einer zentral angeordneten optischen Anzeigeeinheit, welche zeitgleich zwei unterschiedliche Bildausgaben für unterschiedliche Betrachtungswinkelbereiche darstellt. Dabei sind ein zentral angeordnetes Bedienelement und eine Detektoreinheit vorgesehen, welche eine Annäherung an das zentrale Bedienelement und eine Betätigungshandlung des zentralen Bedienelements detektiert und die erkannte Betätigungshandlung einem ersten Betrachtungswinkelbereich oder einem zweiten Betrachtungswinkelbereich zuordnet.

Weitere Bedienkonzepte bzw. Mensch-Maschine-Schnittstellen sind aus der DE 197 53 742 A1, der DE 196 38 015 A1, der DE 10 2005 047 939 A1, der DE 10 2004 037 644 A1, der DE 10 2005 047 650 A1, der DE 10 2005 038 161 A1, der DE 10 2004 040 886 A1, der DE 10 2004 061 419 A1, der DE 103 24 579 A1, der DE 103 21 964 A1, der GB 2 418 741 A, der US 2006/0125803 A1, der US 7 030 861 B1, der WO 97/18547 A1, der DE 197 02 225 C1, der US 5 764 222, der US 5 790 104, der US 5 933 134 A1 und der US 2007/0024592 A1 bekannt.

Es ist Aufgabe der Erfindung, ein Kraftfahrzeug mit einem Touchscreen zu verbessern. Es ist wünschenswert, eine besonders gut für Kraftfahrzeuge geeignete Bedienung bzw. Einstellung von Funktionen eines Kraftfahrzeuges zu schaffen.

Vorgenannte Aufgabe wird durch ein Kraftfahrzeug mit einem Display zur Darstellung veränderlicher Informationen und einem, insbesondere über dem Display angeordneten, Touchscreen zur Eingabe von Befehlen durch Berühren des Touchscreens gelöst, wobei das Kraftfahrzeug eine Steuerung umfasst, mittels der auf dem Display ein Bedienelement zur Bedienung bzw. Einstellung einer Funktion des Kraftfahrzeuges durch Berühren des Touchscreens, insbesondere im Bereich des Bedienelementes, darstellbar ist, und wobei das Kraftfahrzeug ein Gestenerkennungsmodul zur Erkennung einer, insbesondere in der Umgebung des Touchscreens ausgeführten, Geste zur Ausführung bzw. Initialisierung der Ausführung der Funktion des Kraftfahrzeuges umfasst. Einzelheiten bzw. beispielhafte Ausgestaltungen zur Gestenerkennung können einzelnen, der eingangs genannten Dokumente, insbesondere der DE 103 21 964 A1, entnommen werden. Ein Display zur variablen Darstellung von Informationen im Sinne der Erfindung ist insbesondere ein Matrixdisplay, ein TFT o. Ä.

Eine Funktion eines Kraftfahrzeuges ist im Sinne der Erfindung insbesondere die Empfangsfrequenz eines Radios, die Lautstärke einer akustischen Ausgabe in dem Kraftfahrzeug, eine Klangeinstellung (Art und Balance), eine Wahl eines Kartenausschnitts, eine Titelwahl, eine Auswahl eines Zielortes und/oder eine Temperatureinstellung. Eine Funktion eines Kraftfahrzeuges im Sinne der Erfindung ist insbesondere eine Funktion, für die ein Sollwert aus einer Auswahl von, insbesondere kontinuierlichen, Werten getroffen werden soll. Eine Funktion eines Kraftfahrzeugs im Sinne der Erfindung ist insbesondere eine analog, insbesondere einer Skala folgend, einstellbare Funktion. In vorteilhafter Ausgestaltung der Erfindung umfasst die Funktion des Kraftfahrzeuges das Scrollen durch eine Liste. In weiterhin vorteilhafter Ausgestaltung der Erfindung umfasst die Funktion des Kraftfahrzeuges das Verschieben eines Kartenausschnitts. In weiterhin vorteilhafter Ausgestaltung der Erfindung umfasst die Funktion des Kraftfahrzeuges das Skalieren eines Kartenausschnitts. In weiterhin vorteilhafter Ausgestaltung der Erfindung umfasst die Funktion des Kraftfahrzeuges das Bewegen eines auf dem Display dargestellten Elementes.

In weiterhin vorteilhafter Ausgestaltung der Erfindung wird die Funktion des Kraftfahrzeuges mittels der Steuerung ausgeführt. In weiterhin vorteilhafter Ausgestaltung der Erfindung ist mittels der Steuerung ein Signal zur Ausführung der Funktion des Kraftfahrzeuges sendbar.

In weiterhin vorteilhafter Ausgestaltung der Erfindung umfasst das Kraftfahrzeug einen Aktor zur Erzeugung einer haptischen Rückkopplung bei Berühren des Touchscreens. Einzelheiten zur Ausgestaltung einer haptischen Rückkopplung können zum Beispiel der US 2006/0146037 A1 entnommen werden. Die haptische Rückkopplung kann zum Beispiel der Bedienbestätigung zum Beispiel beim Berühren des Touchscreens (im Bereich eines mittels des Displays dargestellten Bedienelementes) erfolgen. Alternativ oder zusätzlich können mittels haptischer Rückkopplung dreidimensionale Strukturen, zum Beispiel zur Ertastbarkeit eines dargestellten Bedienelementes, implementiert werden.

Vorgenannte Aufgabe wird - insbesondere in Verbindung mit vorgenannten Merkmalen - zudem durch ein Verfahren zum Betrieb eines Kraftfahrzeuges mit einem Display zur Darstellung veränderlicher Informationen und einem, insbesondere über dem Display angeordneten, Touchscreen zur Eingabe von Befehlen durch Berühren des Touchscreens gelöst, wobei mittels des Displays ein Bedienelement zur Bedienung bzw. Einstellung einer Funktion des Kraftfahrzeuges durch Berühren des Touchscreens, insbesondere im Bereich des Bedienelementes, dargestellt wird, und wobei die Funktion des Kraftfahrzeuges aufgrund einer, insbesondere in der Umgebung des Touchscreens ausgeführten, Geste einer Hand ohne Berührung des Touchscreens ausgeführt bzw. die Ausführung der Funktion des Kraftfahrzeuges initiiert wird.

In vorteilhafter Ausgestaltung der Erfindung umfasst die Funktion des Kraftfahrzeuges das Scrollen durch eine Liste. In weiterhin vorteilhafter Ausgestaltung der Erfindung umfasst die Funktion des Kraftfahrzeuges das Verschieben eines Kartenausschnitts. In weiterhin vorteilhafter Ausgestaltung der Erfindung umfasst die Funktion des Kraftfahrzeuges das Skalieren eines Kartenausschnitts. In weiterhin vorteilhafter Ausgestaltung der Erfindung umfasst die Funktion des Kraftfahrzeuges das Bewegen eines auf dem Display dargestellten Elementes.

Vorgenannte Aufgabe wird - insbesondere in Verbindung mit vorgenannten Merkmalen - zudem durch ein Verfahren zum Betrieb eines Kraftfahrzeuges mit einem Display zur Darstellung veränderlicher Informationen und einem, insbesondere über dem Display angeordneten, Touchscreen zur Eingabe von Befehlen durch Berühren des Touchscreens gelöst, wobei mittels des Displays ein Kartenausschnitt dargestellt wird, und wobei der Kartenausschnitt aufgrund einer, insbesondere in der Umgebung des Touchscreens ausgeführten, Geste einer Hand ohne Berührung des Touchscreens skaliert und/oder verschoben wird.

In vorteilhafter Ausgestaltung der Erfindung wird anschließend durch Berühren des Touchscreens ein Ort des mittels des Displays dargestellten Kartenausschnitts als Zielort für eine Routenbestimmung ausgewählt.
Sofern der Touchscreen nicht über dem Display angeordnet (und somit als sogenanntes Touchpad ausgestaltet) ist, kann ein Bedienelement, das mittels des Displays dargestellt wird, auch lediglich eine Information sein, welche Funktion mittels des Touchscreens gerade bedienbar ist.

Es kann auch eine Annäherungserkennung vorgesehen sein, die zum Beispiel mittels des Gestenerkennungsmoduls implementierbar ist. Ist eine Annäherungserkennung vorgesehen, so kann zum Beispiel vorgesehen sein, dass bei Annäherung einer Hand an einen Touchscreen ein Wechsel von einem Anzeigemodus in einen Bedienmodus erfolgt. Zusätzlich oder alternativ kann vorgesehen sein, dass zwischen der Bedienung durch einen Fahrer und einen Beifahrer unterschieden wird bzw. werden kann. Alternativ und zusätzlich kann vorgesehen sein, dass der Touchscreen als Multi-Touch-Funktions-Touchscreen ausgestaltet ist. So kann zum Beispiel vorgesehen sein, dass eine Bedienung mit mehreren Fingern gleichzeitig möglich ist, wobei die individuelle Position jedes Fingers separat ausgewertet wird. So können zum Beispiel verschiedene Funktionen einer touch-basierten Geste in Abhängigkeit von der Anzahl der benutzten Finger bedient werden. Darüber hinaus kann vorgesehen sein, dass Routendefinition und Streckenabschätzungen in einem Navigationssystem durch 2-Finger "Zirkel" Angaben erfolgen kann (vgl. zum Beispiel www.jazzmutant.com/lemur features.php und en.wikipedia.org/wiki/Multi-touch).

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel einer Innenansicht eines Kraftfahrzeuges,
- Fig. 2: das Kraftfahrzeug gemäß Fig. 1 in einer Prinzipdarstellung,
- Fig. 3: eine Anzeige- und Bedienvorrichtung,
- Fig. 4: ein Ausführungsbeispiel einer Bedienmaske zur Auswahl eines Albums oder einer CD,
- Fig. 5: ein Ausführungsbeispiel einer Bedienmaske zur Auswahl eines Titels,
- Fig. 6: ein Ausführungsbeispiel eines mittels einer Anzeige- und Bedienvorrichtung dargestellten Kartenausschnitts,
- Fig. 7: ein Ausführungsbeispiel der Anzeige eines verschobenen Kartenausschnitts mittels einer Anzeige- und Bedienvorrichtung und
- Fig. 8: ein Ausführungsbeispiel eines vergrößert dargestellten Kartenausschnitts mittels einer Anzeige- und Bedienvorrichtung.

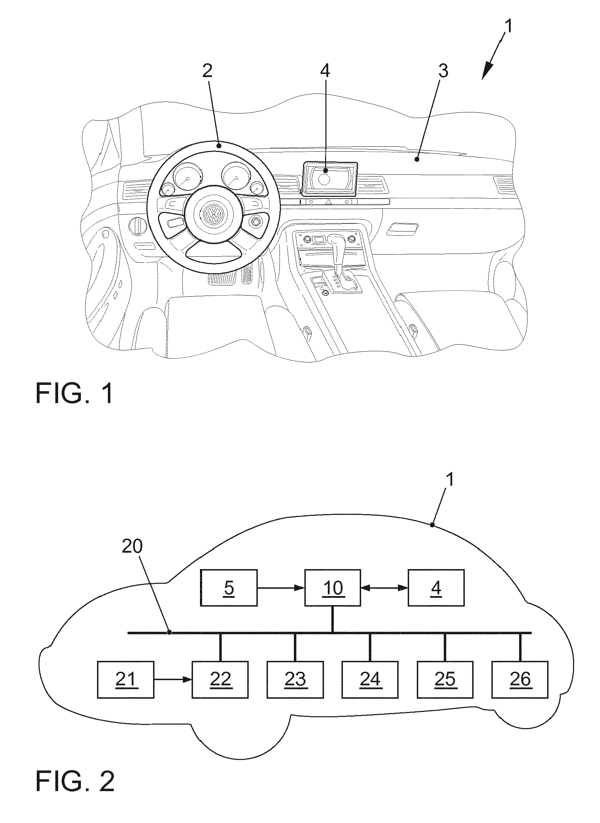

Fig. 1 zeigt die Innenansicht eines Kraftfahrzeuges 1, das in Fig. 2 in einer Prinzipdarstellung gezeigt ist. Das Kraftfahrzeug 1 umfasst eine neben dem Lenkrad 2 in das Armaturenbrett 3 integrierte Anzeige- und Bedienvorrichtung 4, die zum Beispiel gemäß dem in der US 2006/0146037 A1 offenbarten Input Device aufgebaut sein kann. Das Kraftfahrzeug 1 umfasst zudem eine Anzeigesteuerung 10 zur abgestimmten Ansteuerung der Anzeige- und Bedienvorrichtung 4 mit der Anzeige- und Bedienvorrichtung 5. Die Anzeigesteuerung 10 ist mittels eines Bussystems 20 mit einer Bluetooth-Schnittstelle 22, einem Navigationssystem 23, einer Klimaautomatik 24, einem Infotainmentsystem 25 sowie einem Fahrzeugsteuergerät 26 verbunden. Mittels der Anzeige- und Bedienvorrichtung 4 sind zum Beispiel das Navigationssystem 23, die Klimaautomatik 24, das Infotainmentsystem 25, das Fahrzeugsteuergerät 26 sowie - über die Bluetooth-Schnittstelle 22 - ein Mobiltelefon 21 bedienbar.

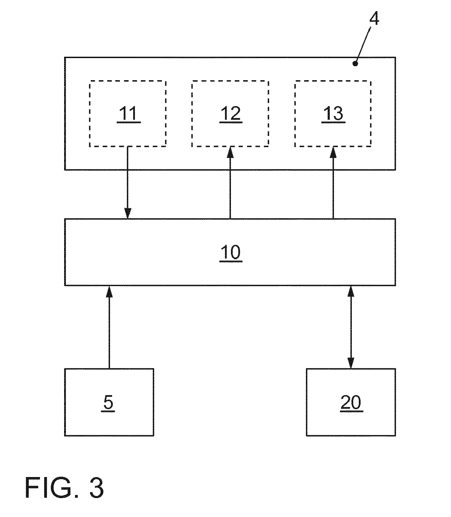

Die in beispielhafter Ausgestaltung in Fig. 3 dargestellte Anzeige- und Bedienvorrichtung 4 umfasst ein Display 12 zur Darstellung veränderlicher Informationen sowie ein über dem Display 12 angeordneten Touchscreen 11 zur Eingabe von Befehlen durch Berühren des Touchscreens 11. Dabei ist insbesondere vorgesehen, dass mittels des Displays 12 ein Bedienelement zur Bedienung einer Funktion des Kraftfahrzeuges 1 durch Berühren des Touchscreens 11 im Bereich des Bedienelementes dargestellt wird. Wird der Touchscreen 11 im Bereich des Bedienelementes berührt, so wird die entsprechende Funktion des Kraftfahrzeuges 1 ausgeführt.

Das Kraftfahrzeug 1 umfasst zudem ein Gestenerkennungsmodul 5 zur Erkennung einer in der Umgebung des Touchscreens 11 ausgeführten Geste zur Ausführung der Funktion des Kraftfahrzeuges 1. Das Gestenerkennungsmodul 5 kann auf eine reine Sensorik beschränkt sein, wobei die Auswertung einer Geste eine Hand in der Anzeigesteuerung 10 implementiert sein kann. Alternativ kann jedoch auch vorgesehen sein, dass die Auswertung von Gesten im Gestenerkennungsmodul 5 erfolgt, und dass der Anzeigesteuerung 10 bereits ausgewertete Befehle übertragen werden. Beide Ausgestaltungen des Gestenerkennungsmoduls 5 sind Ausführungsbeispiele für ein Gestenerkennungsmodul im Sinne der Ansprüche.

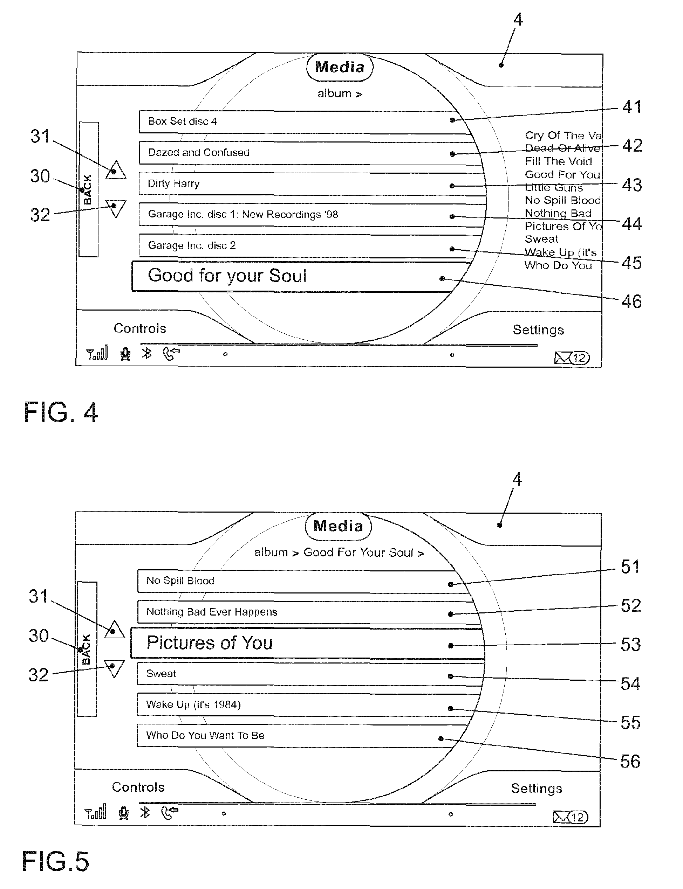

Eine mittels des Touchscreens 11 und des Gestenerkennungsmoduls 5 bedienbare Funktion des Kraftfahrzeuges 1 kann zum Beispiel die Auswahl eines Albums bzw. einer CD in einem CD-Wechsler oder die Auswahl eines Titels aus einem Album oder einer CD sein, wie es beispielhaft in Fig. 4 und Fig. 5 dargestellt ist. Dabei zeigt Fig. 4 eine Liste mit zur Verfügung stehenden Alben bzw. CDs, wobei die einzelnen Einträge der Liste mit den Bezugszeichen 41, 42, 43, 44, 45 und 46 bezeichnet sind. Es kann vorgesehen sein, dass ein Album durch Berühren des Touchscreens 11 im Bereich des entsprechenden Listeneintrags 41, 42, 43, 44, 45, 46 ausgewählt wird.

Darüber hinaus wird ein Bedienelement 30 dargestellt, wobei bei Berühren des Touchscreens 11 im Bereich des Bedienelements 30 ein Rücksprung in ein übergeordnetes Menü erfolgt. Bezugszeichen 31 und 32 bezeichnen mittels des Displays 12 dargestellte Scrolltasten. Wird zum Beispiel der Touchscreen 11 im Bereich der Scrolltaste 32 berührt, so wird eine Hervorhebung einzelner Listeneinträge nach unten bewegt. In dem in Fig. 4 dargestellten Beispiel ist die Hervorhebung dem Listeneintrag 46 zugeordnet.

Anstelle der Berührung des Touchscreens 11 ermöglicht das Gestenerkennungsmodul 5, dass zum Beispiel eine nach unten geführte Geste ebenfalls dazu führt, dass die Hervorhebung eines Listeneintrags 41, 42, 43, 44, 45, 46 nach unten bewegt wird. Damit entspricht eine entsprechende Geste der Berührung des Touchscreens 11 im Bereich des Scrollelements 32. Erfolgt eine nach links geführte Geste, so erfolgt ebenfalls ein Rücksprung in ein übergeordnetes Menü. Eine derartige Geste entspricht somit der Berührung des Touchscreens 11 im Bereich des Bedienelementes 30. Wird eine Geste nach oben geführt, so entspricht dies einem Berühren des Touchscreens 11 im Bereich der Scrolltaste 31.

Ist ein Listeneintrag 41, 42, 43, 44, 45, 46 eine bestimmte Zeit lang hervorgehoben, so erfolgt dessen Auswahl. Im vorliegenden Ausführungsbeispiel erfolgt die Auswahl des Albums "Good for your Soul" und damit die Anzeige der Titel dieses Albums, wie es beispielhaft in Fig. 5 dargestellt ist. Dabei werden die Titel als Listeneinträge 51, 52, 53, 54, 55, 56 dargestellt. Die Auswahl eines Titels kann zum Beispiel in gleicher Weise erfolgen, wie dies unter Bezugnahme auf Fig. 4 für die Auswahl eines Albums bzw. einer CD beschrieben ist. Das heißt, die Auswahl eines Titels kann wiederum sowohl durch Berühren des Touchscreens 11 oder durch eine entsprechende Geste, die von dem Gestenerkennungsmodul 5 erkennbar ist, erfolgen.

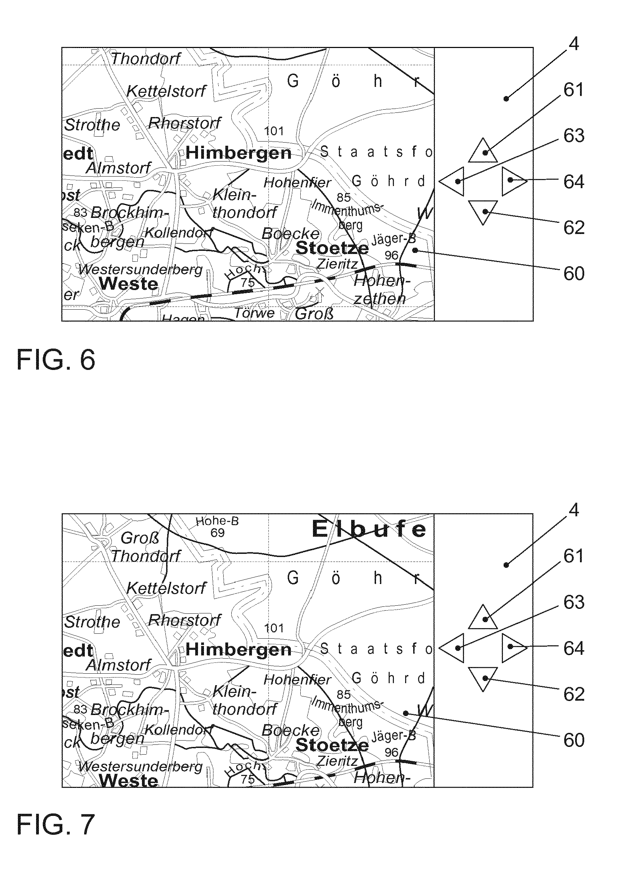

In dem in Fig. 6 dargestellten Ausführungsbeispiel wird mittels der Anzeige- und Bedienvorrichtung 4 ein Kartenausschnitt 60 dargestellt. Darüber hinaus werden Bedienelemente 61, 62, 63 und 64 dargestellt, wobei durch Berühren des Touchscreens 11 im Bereich des entsprechend dargestellten Bedienelementes 61, 62, 63 bzw. 64 der Kartenausschnitt 60 (nach oben, nach unten, nach links bzw. nach rechts) verschoben wird. Wird zum Beispiel der Touchscreen 11 im Bereich des Bedienelementes 62 berührt, so wird der Kartenausschnitt 60 - wie in Fig. 7 dargestellt - nach unten verschoben.

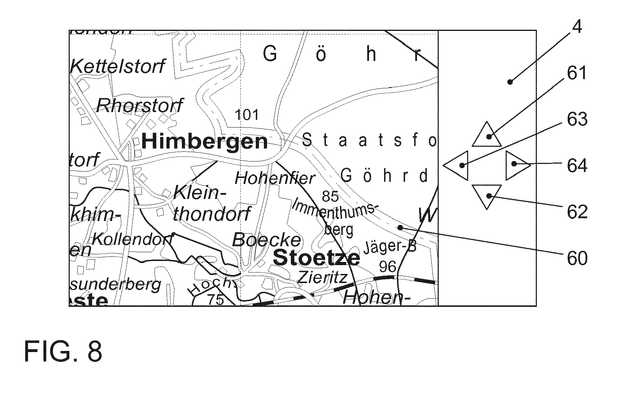

Darüber hinaus ist vorgesehen, dass der Kartenausschnitt 60 in gleicher Weise durch Gesten verschoben werden kann. Erfolgt zum Beispiel ein Winken nach unten, so wird der Kartenausschnitt 60, wie in Fig. 7 dargestellt, nach unten verschoben. Das heißt, ein Winken nach unten bewirkt die gleiche Funktion wie ein Berühren des Touchscreens 11 im Bereich des Bedienelementes 62. Erfolgt ein Winken auf die Anzeige- und Bedienvorrichtung 4 zu, so wird der Kartenausschnitt 60 - wie in Fig. 8 dargestellt - gezoomt (vergrößert dargestellt).

### Bezugszeichenliste

- 1: Kraftfahrzeug
- 2: Lenkrad
- 4: Bedienvorrichtung
- 5: Gestenerkennungsmodul
- 10: Anzeigesteuerung
- 11: Touchscreen
- 12: Display
- 13: Aktor
- 20: Bussystem
- 21: Mobiltelefon
- 22: Bluetooth-Schnittstelle
- 23: Navigationssystem
- 24: Klimaautomatik
- 25: Infotainmentsystem
- 26: Fahrzeugsteuergerät
- 64 30, 61, 62, 63,: Bedienelement
- 31, 32: Scrolltaste
- 53, 54, 41, 42, 43, 44,45, 46, 51, 52,55, 56: Listeneintrag
- 60: Kartenausschnitt

## Patentansprüche

1. Kraftfahrzeug (1) mit einem Display (12) zur Darstellung veränderlicher Informationen und einem, insbesondere über dem Display (12) angeordneten, Touchscreen (11) zur Eingabe von Befehlen durch Berühren des Touchscreens (11), wobei das Kraftfahrzeug (1) eine Steuerung (10) umfasst, mittels der auf dem Display (12) ein Bedienelement zur Bedienung einer Funktion des Kraftfahrzeuges (1) durch Berühren des Touchscreens (11), insbesondere im Bereich des Bedienelementes, darstellbar ist, **dadurch gekennzeichnet, dass** das Kraftfahrzeug (1) ein Gestenerkennungsmodul (5) zur Erkennung einer, insbesondere in der Umgebung des Touchscreens (11) ausgeführten, Geste zur Ausführung der Funktion des Kraftfahrzeuges (1) umfasst.

2. Kraftfahrzeug nach Anspruch 1, **dadurch gekennzeichnet, dass** die Funktion des Kraftfahrzeuges (1) mittels der Steuerung (10) ausführbar ist.

3. Kraftfahrzeug nach Anspruch 1 oder 2, **dadurch gekennzeichnet, dass** mittels der Steuerung (10) ein Signal zur Ausführung der Funktion des Kraftfahrzeuges (1) sendbar ist.

4. Kraftfahrzeug nach Anspruch 1, 2 oder 3, **dadurch gekennzeichnet, dass** es einen Aktor (13) zur Erzeugung einer haptischen Rückkopplung bei Berühren des Touchscreens (11) umfasst.

5. Kraftfahrzeug nach einem der vorhergehenden Ansprüche, **dadurch gekennzeichnet, dass** die Funktion des Kraftfahrzeuges (1) das Scrollen durch eine Liste umfasst.

6. Kraftfahrzeug nach einem der vorhergehenden Ansprüche, **dadurch gekennzeichnet, dass** die Funktion des Kraftfahrzeuges (1) das Verschieben eines Kartenausschnitts (60) umfasst.

7. Kraftfahrzeug nach einem der vorhergehenden Ansprüche, **dadurch gekennzeichnet, dass** die Funktion des Kraftfahrzeuges (1) das Skalieren eines Kartenausschnitts (60) umfasst.

8. Kraftfahrzeug nach einem der vorhergehenden Ansprüche, **dadurch gekennzeichnet, dass** die Funktion des Kraftfahrzeuges (1) das Bewegen eines auf dem Display dargestellten Elementes umfasst.

9. Verfahren zum Betrieb eines Kraftfahrzeuges (1) mit einem Display (12) zur Darstellung veränderlicher Informationen und einem, insbesondere über dem Display (12) angeordneten, Touchscreen (11) zur Eingabe von Befehlen durch Berühren des Touchscreens (11), insbesondere Verfahren zum Betrieb eines Kraftfahrzeuges (1) nach einem der vorhergehenden Ansprüche, wobei mittels des Displays (12) ein Bedienelement zur Bedienung einer Funktion des Kraftfahrzeuges (1) durch Berühren des Touchscreens (11), insbesondere im Bereich des Bedienelementes, dargestellt wird, **dadurch gekennzeichnet, dass** die Funktion des Kraftfahrzeuges (1) aufgrund einer, insbesondere in der Umgebung des Touchscreens (11) ausgeführten, Geste einer Hand ohne Berührung des Touchscreens (11) ausgeführt wird.

10. Verfahren nach Anspruch 9, **dadurch gekennzeichnet, dass** die Funktion des Kraftfahrzeuges (1) das Scrollen durch eine Liste umfasst.

11. Verfahren nach Anspruch 9 oder 10, **dadurch gekennzeichnet, dass** die Funktion des Kraftfahrzeuges (1) das Verschieben eines Kartenausschnitts (60) umfasst.

12. Verfahren nach Anspruch 9, 10 oder 11, **dadurch gekennzeichnet, dass** die Funktion des Kraftfahrzeuges (1) das Skalieren eines Kartenausschnitts (60) umfasst.

13. Verfahren nach einem der Ansprüche 9 bis 12, **dadurch gekennzeichnet, dass** die Funktion des Kraftfahrzeuges (1) das Bewegen eines auf dem Display dargestellten Elementes umfasst.

14. Verfahren zum Betrieb eines Kraftfahrzeuges (1) mit einem Display (12) zur Darstellung veränderlicher Informationen und einem, insbesondere über dem Display (12) angeordneten, Touchscreen (11) zur Eingabe von Befehlen durch Berühren des Touchscreens (11), insbesondere Verfahren zum Betrieb eines Kraftfahrzeuges (1) nach einem der Ansprüche 1 bis 8, wobei mittels des Displays (12) ein Kartenausschnitt (60) dargestellt wird, **dadurch gekennzeichnet, dass** der Kartenausschnitt (60) aufgrund einer, insbesondere in der Umgebung des Touchscreens (11) ausgeführten, Geste einer Hand ohne Berührung des Touchscreens (11) skaliert oder verschoben wird.

15. Verfahren nach Anspruch 14, **dadurch gekennzeichnet, dass** anschließend durch Berühren des Touchscreens (11) ein Ort des mittels des Displays (12) dargestellten Kartenausschnitts (60) als Zielort für eine Routenbestimmung ausgewählt wird.
